# EUROPEAN PATENT APPLICATION

(11) **EP 2 551 989 A1**
(43) Date of publication of application: **30.01.2013**
(21) Application number: 11175707.6
(22) Date of filing: 28.07.2011
(51) Int. Cl.: H02J 7/04

(54) **Charge system for series connected rechargeable batteries**

(71) Applicant: Joy Ride Tech. Co., Ltd., Nantou (TW); Ruan, Chia-Wen, Nantou (TW)
(72) Inventor: Ruan, Chia-Wen, NANTOU CITY (TW); Wei, Eton, NANTOU CITY (TW)
(74) Representative: Regimbeau

(57) **Abstract**

A charge system for series connected rechargeable batteries (90) includes: a power generating unit (2) generating a DC input power (Vdc) based on a voltage input from an AC power source (8); a charge control unit (3) generating a charge voltage (Vcc) based at least the DC input power (Vdc) from the power generating unit (2) and supplying the charge voltage (Vcc) to the rechargeable batteries (90) through an interface unit (4); and multiple detecting units (5) each detecting a voltage of a corresponding rechargeable battery (90) through the interface unit (4), generating a feedback power (Vb) based on the voltage of the corresponding rechargeable battery (90) upon detecting that the voltage of the corresponding rechargeable battery (90) is within a predetermined voltage range, and outputting the feedback power (Vb) to the charge control unit (3) such that the charge voltage (Vcc) is generated by the charge control unit (3) further based on the feedback power (Vb) from any one of the detecting units (5).

## Description

The invention relates to a charge system, and more particularly to a charge system for series connected rechargeable batteries.

In a conventional method of charging a plurality of series connected rechargeable batteries disclosed in Taiwanese Patent No.I323048, a charge circuit supplies a charge voltage to charge the rechargeable batteries, and reduces the charge voltage upon detection of full-charging of one rechargeable battery. At the same time, the full-charged rechargeable battery is disconnected from the other rechargeable batteries to terminate charging of the full-charged rechargeable battery, thereby avoiding over-charging of the full-charged rechargeable battery. Thus, the charge voltage gradually reduces with increasing number of the full-charged rechargeable batteries.

However, the charge circuit is required to provide various charge voltages in accordance with the number of the rechargeable batteries, thereby resulting in relatively complicated circuit design.

Therefore, an object of the present invention is to provide a charge system for series connected rechargeable batteries that can be easily manufactured and that can reduce power consumption.

According to the present invention, there is provided a charge system for series connected rechargeable batteries. The charge system comprises:
a power generating unit adapted to receive a voltage input from an AC power source and operable to generate a DC input power based on at least the voltage input;
a charge control unit coupled to the power generating unit, receiving the DC input power from the power generating unit, and operable to generate a charge voltage based on at least the DC input power;
an interface unit connected electrically to the charge control unit and adapted to be connected electrically to each of the rechargeable batteries such that the charge voltage from the charge control unit is supplied to the rechargeable batteries through the interface unit to charge the rechargeable batteries; and
a plurality of detecting units each connected electrically to the charge control unit and the interface unit, each of the detecting units being operable to detect a voltage of a corresponding one of the rechargeable batteries through the interface unit and to generate a feedback power based on the voltage of the corresponding one of the rechargeable batteries upon detecting that the voltage of the corresponding one of the rechargeable batteries is within a predetermined voltage range, and outputting the feedback power to the charge control unit such that the charge voltage is generated by the charge control unit further based on the feedback power from any one of the detecting units.

Other features and advantages of the present invention will become apparent in the following detailed description of the preferred embodiment with reference to the accompanying drawings, of which:

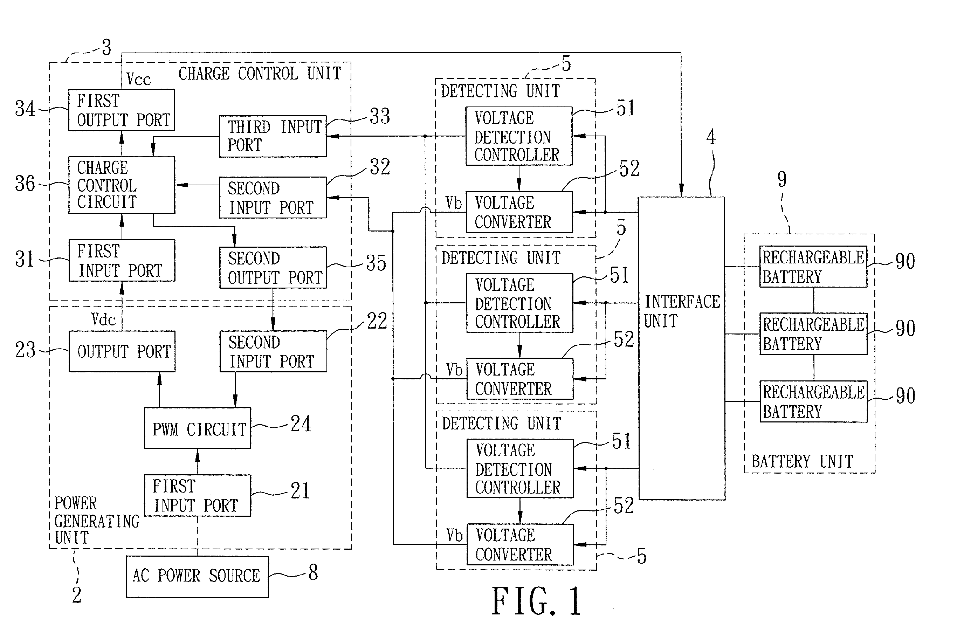

Figure 1 is a schematic circuit block diagram illustrating the preferred embodiment of a charge system for series connected rechargeable batteries according to the present invention.

Referring to Figure 1, the preferred embodiment of a charge system for a battery unit 9 according to the present invention is shown to include a power generating unit 2, a charge control unit 3, an interface unit 4, and a plurality of detecting units 5. In this embodiment, the battery unit 9 includes three series connected rechargeable batteries 90.

The power generating unit 2 includes a first input port 21, a second input port 22, an output port 23, and a pulse width modulation (PWM) circuit 24 coupled to the first and second input ports 21, 22 and the output port 23. The first input port 21 is adapted to be connected electrically to an AC power source 8 for receiving the voltage input from the AC power source 8. The PWM circuit 24 is operable to generate a DC input power (Vdc) based on at least the voltage input. The DC input power (Vdc) is outputted through the output port 23.

The charge control unit 3 includes a first input port 31, a second input port 32, a third input port 33, a first output port 34, a second output port 35 and a charge control circuit 36 connected electrically to the first, second and third input ports 31, 32, 33 and the first and second output ports 34, 35. The first input port 31 is coupled to the output port 23 of the power generating unit 2 for receiving the DC input power (Vdc) therefrom. The second output port 35 is coupled to the second input port 22 of the power generating unit 2. The charge control circuit 36 is operable to generate a charge voltage (Vcc) based on at least the DC input power (Vdc). The charge voltage (Vcc) is outputted through the first output port 34.

The interface unit 4 is connected electrically to the first output port 34 of the charge control unit 3, and is adapted to be connected electrically to each of the rechargeable batteries 90 of the battery unit 9 such that the charge voltage (Vcc) from the first output port 34 of the charge control unit 3 is supplied to the battery unit 9 to charge the rechargeable batteries 90.

Each detecting unit 5 is connected electrically to the charge control unit 3 and the interface unit 4. Each detecting unit 5 is operable to detect a voltage of a corresponding rechargeable battery 90 of the battery unit 9 through the interface unit 4 and to generate a feedback power (Vb) based on the voltage of the corresponding rechargeable battery 90 of the battery unit 9 upon detecting that the voltage of the corresponding rechargeable battery 90 of the battery unit 9 is within a predetermined voltage range, and outputs the feedback power (Vb) to the charge control unit 3 such that the charge voltage (Vcc) is generated by the charge control unit 3 further based on the feedback power (Vb) from any one of the detecting units 5. In this embodiment, each detecting unit 5 includes a voltage detection controller 51 and a voltage converter 52. For each detecting unit 5, the voltage detection controller 51 is connected electrically to the interface unit 4 and the third input port 33 of the charge control unit 3, detects the voltage of the corresponding rechargeable battery 90, and is operable to generate a driving signal upon detecting that the voltage of the corresponding rechargeable battery 90 is within the predetermined voltage range. In addition, the voltage detection controller 51 is operable to generate a state signal indicating the voltage of the corresponding rechargeable battery 90 based on a detection result made thereby and to output the state signal to the third input port 33 of the charge control unit 3 such that the charge control circuit 36 of the charge control unit 3 receives the state signal from the voltage detection controller 51 of each detecting unit 5 through the third input port 33 to obtain charge information for the battery unit 9. In this embodiment, the state signal is generated using an optical coupler (not shown). The voltage converter 52 is connected electrically to the voltage detection controller 51, the interface unit 4 and the second input port 32 of the charge control unit 3. The voltage converter 52 receives the driving signal from the voltage detection controller 51, and the voltage of the corresponding rechargeable battery 90 through the interface unit 4. The voltage converter 52 is driven by the driving signal to convert the voltage of the corresponding rechargeable battery 90 into the feedback power (Vb). The feedback power (Vb) is outputted from the voltage converter 52 to the charge control circuit 36 of the charge control unit 3 through the second input port 32. In this embodiment, the voltage converter 52 of each detecting unit 5 boosts the voltage of the corresponding rechargeable battery 90 so that the DC input power (Vcd) and the feedback power (Vb) have the same voltage.

The charge control circuit 36 of the charge control unit 3 is operable to generate a control signal upon receipt of the feedback power (Vb) from the voltage converter 52 of any one of the detecting units 5, and outputs the control signal to the second input port 22 of the power generating unit 2. It is noted that the control signal is associated with the amount of the feedback power (Vb) received by the charge control circuit 36 of the charge control unit 3. As a result, the PWM circuit 24 of the power generating unit 2 receives the control signal through the second input port 21, and is operable to reduce the DC input power (Vdc) based on the control signal.

In sum, due to the presence of the detecting units 5, the power generating unit 2 is capable of reducing the DC input power (Vdc) with the amount of the feedback power (Vb) received by the charge control unit 3 without complicated circuit design. Therefore, the charge system of the present invention can be easily manufactured and has reduced power consumption.

## Claims

1. A charge system for series connected rechargeable batteries (90), **characterized by**:
a power generating unit (2) adapted to receive a voltage input from an AC power source (8) and operable to generate a DC input power (Vdc) based on at least the voltage input;
a charge control unit(3) coupled to said power generating unit (2), receiving the DC input power (Vdc) from said power generating unit (2), and operable to generate a charge voltage (Vcc) based on at least the DC input power (Vdc);
an interface unit (4) connected electrically to said charge control unit (3) and adapted to be connected electrically to each of the rechargeable batteries (90) such that the charge voltage (Vcc) from said charge control unit (3) is supplied to the rechargeable batteries (90) through said interface unit (4) to charge the rechargeable batteries (90); and
a plurality of detecting units (5) each connected electrically to said charge control unit (3) and said interface unit (4), each of said detecting units (5) being operable to detect a voltage of a corresponding one of the rechargeable batteries (90) through said interface unit (4) and to generate a feedback power (Vb) based on the voltage of the corresponding one of the rechargeable batteries (90) upon detecting that the voltage of the corresponding one of the rechargeable batteries (90) is within a predetermined voltage range, and outputting the feedback power (Vb) to said charge control unit (3) such that the charge voltage (Vcc) is generated by said charge control unit (3) further based on the feedback power (Vb) from any one of said detecting units (5).

2. The charge system as claimed in Claim 1, **characterized in that** each of said detecting units (5) includes:
a voltage detection controller (51) connected electrically to said interface unit (4) for detecting the voltage of the corresponding one of the rechargeable batteries (90), and operable to generate a driving signal upon detecting that the voltage of the corresponding one of the rechargeable batteries (90) is within the predetermined voltage range;
a voltage converter (52) connected electrically to said voltage detection controller (51) and said interface unit (4), receiving the driving signal from said voltage detection controller (51), and the voltage of the corresponding one of the rechargeable batteries (90) through said interface unit (4), and driven by the driving signal to convert the voltage of the corresponding one of the rechargeable batteries (90) into the feedback power (Vb).

3. The charge system as claimed in Claim 2, further **characterized in that** said voltage converter (52) of each of said detecting units (5) boosts the voltage of the corresponding one of the rechargeable batteries (90) so that the DC input power (Vdc) and the feedback power (Vb) have the same voltage.

4. The charge system as claimed in Claim 2, further **characterized in that**:
said charge control unit (3) is operable to generate a control signal upon receipt of the feedback power (Vb) from said voltage converter (52) of any one of said detecting units (5), and outputs the control signal to said power generating unit (2) , the control signal being associated with the amount of the feedback power (Vb) received by said charge control unit (3); and
said power generating unit (2) receives the control signal from said charge control unit (3) , and is operable to reduce the DC input power (Vdc) based on the control signal.

5. The charge system as claimed in Claim 4, further **characterized in that** said power generating unit (2) includes:
a first input port (21) adapted to be coupled to the AC power source (8) for receiving the voltage input;
a second input port (22) for receiving the control signal from said charge control unit (3);
an output port (23); and
a pulse width modulation circuit (24) connected electrically to said first input port (21), said second input port (22) and said output port (23), said pulse width modulation circuit (24) receiving the voltage input through said first input port (21), generating the DC input power (Vdc) based on the voltage input and the control signal, and outputting the DC input power (Vdc) through said output port (23).

6. The charge system as claimed in Claim 5, further **characterized in that** said charge control unit (3) includes:
a first input port (31) coupled to said output port (23) of said power generating unit (2) for receiving the DC input power (Vdc);
a second input port (32) coupled to said voltage converter (52) of each of said detecting units (5) for receiving the feedback power (Vb) therefrom;
a first output port (34) coupled to said interface unit (4);
a second output port (35) coupled to said second input port (22) of said power generating unit (2); and
a charge control circuit (36) connected electrically to said first and second input ports (31, 32) and said first and second output ports (34, 35) of said charge control unit (3), said charge control circuit (36) receiving the DC input power (Vdc) and the feedback power (Vb) respectively through said first input port (31) and said second input port (32), generating the charge voltage (Vcc) based on the DC input power (Vdc) and the feedback power (Vb), generating the control signal based on the amount of the feedback power (Vb) , and outputting the charge voltage (Vcc) and the control signal respectively to said interface unit (4) and said second input port (22) of said power generating unit (2) through said first and second output ports (34, 35).

7. The charge system as claimed in Claim 6, further **characterized in that**:
said charge control unit (3) further includes a third input port (33) connected electrically to said charge control circuit (36) and said voltage detection controller (51) of each of said detecting units (5); and
said voltage detection controller (51) of each of said detecting units (5) is operable to generate a state signal indicating the voltage of the corresponding one of the rechargeable batteries (90) based on a detection result made thereby, and outputs the state signal to said third input port of said charge control unit such that said charge control circuit (36) of said charge control unit (3) receives the state signal from said voltage detection controller (51) of each of said detecting units (5) through said third input port (33) to obtain charge information for the rechargeable batteries (90).
